# EUROPEAN PATENT SPECIFICATION

(11) **EP 2 490 424 B1**
(45) Date of publication and mention of the grant of the patent: **08.04.2020**
(21) Application number: 11155028.1
(22) Date of filing: 18.02.2011
(51) Int. Cl.: H04M 3/42, H04M 3/56, H04L 12/18

(54) **METHOD AND SYSTEM FOR RECORDING A CONFERENCE CALL**
Verfahren und System zum Aufzeichnen eines Konferenzrufs
Procédé et système d'enregistrement d'appel en conférence

(43) Date of publication of application: 22.08.2012
(73) Proprietor: BlackBerry Limited, Waterloo, ON N2K 0A7 (CA)
(72) Inventor: Oliver, Brian, Alexander, Waterloo Ontario N2L 3X2 (CA); Punjabi, Manish, Sunder, Redwood City, CA 94065 (US); Gupta, Vivek, Brazos East Irving, TX 75039 (US); George, Richard, John, Waterloo Ontario N2L 3X2 (CA)
(74) Representative: MERH-IP Matias Erny Reichl Hoffmann Patentanwälte PartG mbB

(56) References cited:
- US-A1- 2003 234 772
- US-A1- 2004 207 724
- US-A1- 2007 263 603
- US-A1- 2010 232 579

## Description

### FIELD

Example embodiments relate to conference call systems and methods, and in particular to recording of a conference call.

### BACKGROUND

During a conference call, voice-communication connections are typically made between communication devices such as telephones or mobile phones. In some systems, one member of the conference call may broadcast his video or presentation to the others in a conference call broadcast.

Within a conference call setting there are many reasons why a participant may be distracted from the call or lose parts of the ongoing conversation. This is particularly the case where the participant is using a mobile device to access the call and may encounter times when the connectivity to the wireless network is lost. The loss of connectivity could mean a brief period of silence on the call although the call remains active, or a call that is entirely dropped and must be completely re-established.

Once re-connected, the participant typically has lost some part of the discussion and needs to interrupt and ask others to provide a catchup of what was missed. This becomes impractical and wasteful of network resources, especially when there are numerous parties involved.

Other difficulties with existing teleconferencing systems will be apparent to those skilled in the art in view of the detailed description below.

Document US 2010/0232579 A1 discloses a teleconferencing system in which, based on a user input via a user interface, a history of a teleconference can be browsed. The browsing is done by actuating navigation buttons. Document US 2007/0263603 discloses a similar conferencing system.

Document US 2003/0234772 A1 discloses a system that captures whiteboard content and audio signals of a meeting using a digital camera and a microphone.

Document US2004/0207724 discloses a system for recording a conference session that provides a graphical interface allowing the user control the recordings in real time.

### BRIEF DESCRIPTION OF THE DRAWINGS

Reference will now be made, by way of example, to the accompanying drawings which show example embodiments, and in which:
Figure 1 shows, in block diagram form, an example system for managing enterprise-related mobile calls, including an enterprise communications platform, to which example embodiments may be applied;
Figure 2 shows, in block diagram form, further details of an embodiment of the enterprise communications platform;
Figure 3 shows another embodiment of the enterprise communications platform;
Figure 4 shows yet another embodiment of the enterprise communications platform;
Figure 5 shows further details of the enterprise communications platform of Figure 3;
Figure 6 shows, in block diagram form, a conference call system including the enterprise communications platform shown in Figure 1 and client devices;
Figure 7 shows a block diagram illustrating a mobile communication device in accordance with an example embodiment;
Figure 8 shows a user interface as displayed on the mobile communication device of Figure 7, for scheduling of a conference call;
Figure 9 shows the user interface of Figure 8, for providing control functions for a conference call session;
Figure 10 shows an example conversation between the enterprise communications platform and a client device in accordance with an example embodiment, wherein the enterprise communications platform stores conference call content; and
Figure 11 shows an example flow diagram for storing conference call content within a client device in accordance with an example embodiment,

Similar reference numerals may have been used in different figures to denote similar components.

### DESCRIPTION OF EXAMPLE EMBODIMENTS

According to an embodiment of the present invention, a method for recording a conference call session according to claim 1 is provided. Further, according to an embodiment of the present invention, a conference call system according to claim 12 is provided,

Some example embodiments relate to a conference call system wherein a participant of a conference call has lost track of some part of the discussion. A system is provided which can allow the participant to navigate through various points of the present conference call without interrupting the call to ask for a review of the discussion.

Example embodiments described herein relate to conference call systems and methods. In example embodiments, a conference call server and/or one of the participants may store in a storage the content of a conference call, for example audio, video, and/or presentation content. This storage can be accessed at any point during the conference call and played/replayed for the user. The client device can also be used to pause an ongoing conference call, wherein the server and/or client device stores the ongoing conference call in storage and freezes the presently displayed content. The client device can also rewind an ongoing conference call, to review content which occurred earlier within the conference call.

In one aspect, there is provided a method for recording a conference call session established between a client device and a server device, the conference call session being associated with time indicators including a current time indicator. The method includes storing in a memory conference call content from the conference call session along with associated time indicators, receiving an instruction though an interface of the client device during the conference call session, and outputting on the client device, in response to receiving the instruction, the conference call content from the memory from a time indicator prior to the current time indicator.

In another aspect, there is provided a conference call system including a client device having a controller and a communications module for establishing a conference call session with a server device, the conference call session being associated with time indicators including a current time indicator, a memory for storing conference call content from the conference call session along with associated time indicators, an interface on the client device for receiving an instruction during the conference call session, and an output on the client device for outputting, in response to receiving the instruction, the conference call content from the memory from a time indicator prior to the current time indicator.

In yet another aspect, there is provided a non-transitory computer readable medium having recorded thereon statements and instructions for execution by one or more devices for recording a conference call session established between a client device and a server device, the conference call session being associated with time indicators including a current time indicator, the statements and instructions including code means for performing the method.

Example embodiments relate to the control and management of conference call communications. Although reference may be made to "calls" and "talk" in the description of example embodiments below, it will be appreciated that some of the described systems and methods may be applicable to session-based communications in general and not limited to voice calls. Reference to calls may for example include shared data (e.g. presentation content) as well as media sessions which may for example include video and/or audio.

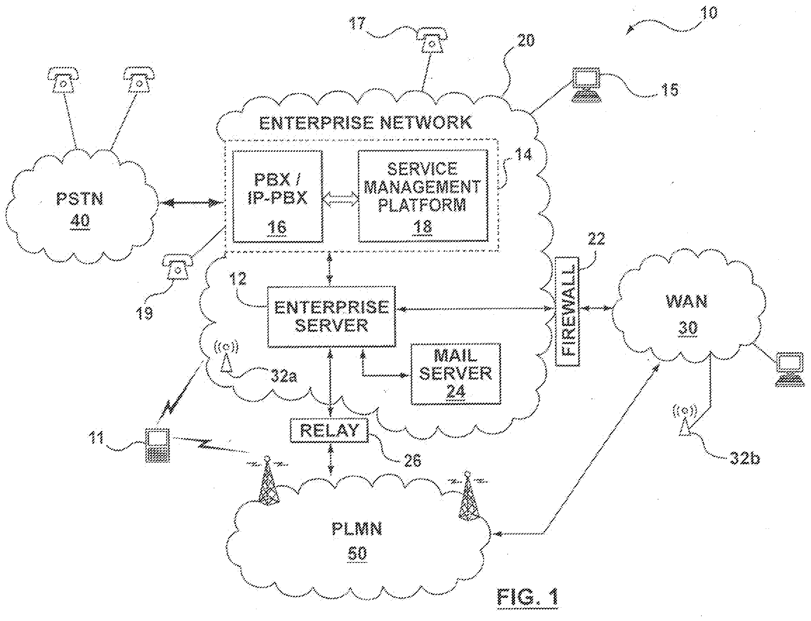

Reference is now made to Figure 1, which shows, in block diagram form, an example system, generally designated 10, for the control and management of communications. The system 10 includes an enterprise or business system 20, which in many embodiments includes a local area network (LAN). In the description below, the enterprise or business system 20 may be referred to as an enterprise network 20. It will be appreciated that the enterprise network 20 may include more than one network and may be located in multiple geographic areas in some embodiments.

The enterprise network 20 may be connected, often through a firewall 22, to a wide area network (WAN) 30, such as the Internet. The enterprise network 20 may also be connected to a public switched telephone network (PSTN) 40 via direct inward dialing (DID) trunks or primary rate interface (PRI) trunks.

The enterprise network 20 may also communicate with a public land mobile network (PLMN) 50, which may also be referred to as a wireless wide area network (WWAN) or, in some cases, a cellular network. The connection with the PLMN 50 may be made via a relay 26, as understood in the art.

The enterprise network 20 may also provide a wireless local area network (WLAN) 32a featuring wireless access points. Other WLANs 32 may exist outside the enterprise network 20. For example, WLAN 32b may be connected to WAN 30.

The system 10 may include a number of enterprise-associated mobile devices 11 (only one shown). The mobile devices 11 may include devices equipped with communications modules for cellular communication through the PLMN 50, mobile devices equipped for Wi-Fi communications over one of the WLANs 32, or dual-mode devices capable of both cellular and data communications. WLANs 32 may be configured in accordance with one of the IEEE 802.11 specifications.

It will be understood that the mobile devices 11 include one or more radio transceivers and associated processing hardware and software to enable wireless communications with the PLMN 50 and/or one of the WLANs 32. In various embodiments, the PLMN 50 and mobile devices 11 may be configured to operate in compliance with any one or more of a number of wireless protocols, including GSM, GPRS, CDMA, EDGE, UMTS, EvDO, HSPA, 3GPP, or a variety of others. It will be appreciated that the mobile device 11 may roam within the PLMN 50 and across PLMNs, in known manner, as the user moves. In some instances, the dual-mode mobile devices 11 and/or the enterprise network 20 are configured to facilitate roaming between the PLMN 50 and a WLAN 32, and are thus capable of seamlessly transferring sessions (such as voice calls) from a connection with the cellular interface of the dual-mode device 11 to the WLAN 32 interface of the dual-mode device 11, and vice versa.

The mobile devices 11 may be various types of communication devices. Such mobile devices 11 may include "Class A" devices, which are able to function continuously as dual-mode devices, capable of both media and data communications. Mobile devices 11 may also include "non-Class A" devices, which may function as dual-mode devices for initialization or prior to connection with the enterprise communications platform 14, but may lose data functionality once a media session (e.g., voice call) is established. The enterprise network 20 may also include additional client devices which are voice-only or media-only devices, which may be digital or analog for communication with the PSTN, and which may not have data capabilities (herein referred to as "voice-only" or "media-only" devices). In other embodiments, the mobile devices 11 may include any suitable client device configured with the communications functionality described herein, and may for example include computer devices, relays, proxies, gateways and any appropriate User Agents (as defined in SIP).

The enterprise network 20 typically includes a number of networked servers, computers, and other devices. For example, the enterprise network 20 may connect one or more desktop or laptop computers 15 (one shown). The connection may be wired or wireless in some embodiments. The enterprise network 20 may also connect to one or more digital telephone sets 17 (one shown).

The enterprise network 20 may include one or more mail servers, such as mail server 24, for coordinating the transmission, storage, and receipt of electronic messages for client devices operating within the enterprise network 20. Typical mail servers include the Microsoft Exchange Server™ and the IBM Lotus Domino™ server. Each user within the enterprise typically has at least one user account within the enterprise network 20. Associated with each user account is message address information, such as an e-mail address. Messages addressed to a user message address are stored on the enterprise network 20 in the mail server 24. The messages may be retrieved by the user using a messaging application, such as an e-mail client application. The messaging application may be operating on a user's computer 15 connected to the enterprise network 20 within the enterprise. In some embodiments, the user may be permitted to access stored messages using a remote computer, for example at another location via the WAN 30 using a VPN connection. Using the messaging application, the user may also compose and send messages addressed to others, within or outside the enterprise network 20. The messaging application causes the mail server 24 to send a composed message to the addressee, often via the WAN 30.

The relay 26 serves to route messages received over the PLMN 50 from the mobile device 11 to the corresponding enterprise network 20. The relay 26 also pushes messages from the enterprise network 20 to the mobile device 11 via the PLMN 50.

The enterprise network 20 also includes an enterprise server 12. Together with the relay 26, the enterprise server 12 functions to redirect or relay incoming e-mail messages addressed to a user's e-mail address within the enterprise network 20 to the user's mobile device 11 and to relay incoming e-mail messages composed and sent via the mobile device 11 out to the intended recipients within the WAN 30 or elsewhere. The enterprise server 12 and relay 26 together facilitate "push" e-mail service for the mobile device 11 enabling the user to send and receive e-mail messages using the mobile device 11 as though the user were connected to an e-mail client within the enterprise network 20 using the user's enterprise-related e-mail address, for example on computer 15.

As is typical in many enterprises, the enterprise network 20 includes a Private Branch eXchange (although in various embodiments the PBX may be a standard PBX or an IP-PBX, for simplicity the description below uses the term PBX to refer to both) 16 having a connection with the PSTN 40 for routing incoming and outgoing voice calls for the enterprise. The PBX 16 is connected to the PSTN 40 via DID trunks or PRI trunks, for example. The PBX 16 may use ISDN signaling protocols for setting up and tearing down circuit-switched connections through the PSTN 40 and related signaling and communications. In some embodiments, the PBX 16 may be connected to one or more conventional analog telephones 19. The PBX 16 is also connected to the enterprise network 20 and, through it, to telephone terminal devices, such as digital telephone sets 17, softphones operating on computers 15, etc. Within the enterprise, each individual may have an associated extension number, sometimes referred to as a PNP (private numbering plan), or direct dial phone number. Calls outgoing from the PBX 16 to the PSTN 40 or incoming from the PSTN 40 to the PBX 16 are typically circuit-switched calls. Within the enterprise, e.g. between the PBX 16 and terminal devices, voice calls are often packet-switched calls, for example Voice-over-IP (VoIP) calls.

The enterprise network 20 may further include a Service Management Platform (SMP) 18 for performing some aspects of messaging or session control, like call control and advanced call processing features. The SMP 18 may, in some cases, also perform some media handling. Collectively the SMP 18 and PBX 16 may be referred to as the enterprise communications platform, generally designated 14. It will be appreciated that the enterprise communications platform 14 and, in particular, the SMP 18, is implemented on one or more servers having suitable communications interfaces for connecting to and communicating with the PBX 16 and/or DID/PRI trunks. Although the SMP 18 may be implemented on a stand-alone server, it will be appreciated that it may be implemented into an existing control agent/server as a logical software component. As will be described below, the SMP 18 may be implemented as a multi-layer platform.

The enterprise communications platform 14 implements the switching to connect session legs and may provide the conversion between, for example, a circuit-switched call and a VoIP call, or to connect legs of other media sessions. In some embodiments, in the context of voice calls the enterprise communications platform 14 provides a number of additional functions including automated attendant, interactive voice response (IVR), call forwarding, voice mail, etc. It may also implement certain usage restrictions on enterprise users, such as blocking international calls or 1-900 calls. In many embodiments, Session Initiation Protocol (SIP) may be used to set-up, manage, and terminate media sessions for voice calls. Other protocols may also be employed by the enterprise communications platform 14, for example, Web Services, Computer Telephony Integration (CTI) protocol, Session Initiation Protocol for Instant Messaging and Presence Leveraging Extensions (SIMPLE), and various custom Application Programming Interfaces (APIs), as will be described in greater detail below.

One of the functions of the enterprise communications platform 14 is to extend the features of enterprise telephony to the mobile devices 11. For example, the enterprise communications platform 14 may allow the mobile device 11 to perform functions akin to those normally available on a standard office telephone, such as the digital telephone set 17 or analog telephone set 15. Example features may include direct extension dialing, enterprise voice mail, conferencing, call transfer, call park, etc.

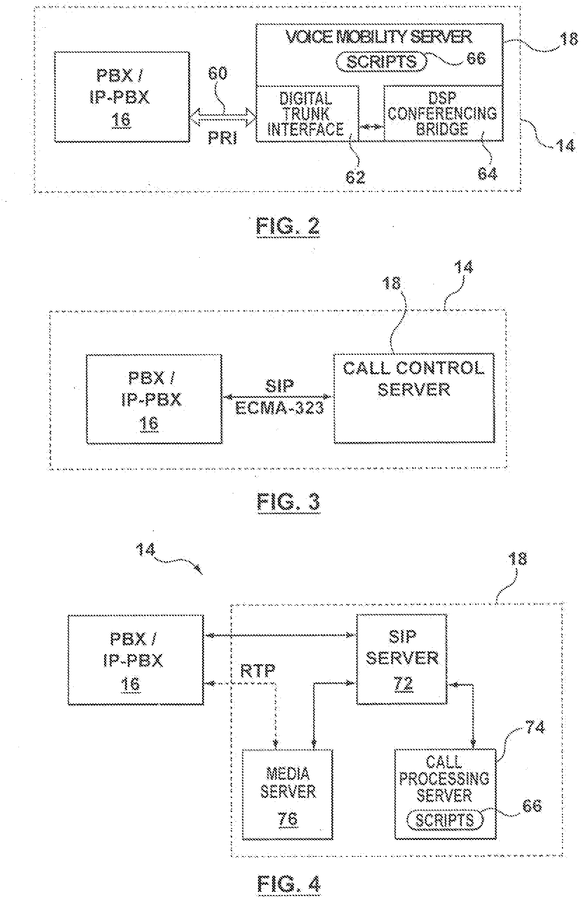

Reference is now made to Figures 2 to 4, which show example embodiments of the enterprise communications system 14. Figure 2 illustrates an embodiment intended for use in a circuit-switched TDM context. The PBX 16 is coupled to the SMP 18 via PRI connection 60 or other suitable digital trunk. In some embodiments, the PRI connection 60 may include a first PRI connection, a second PRI connection, and a channel service unit (CSU), wherein the CSU is a mechanism for connecting computing devices to digital mediums in a manner that allows for the retiming and regeneration of incoming signals. It will be appreciated that there may be additional or alternative connections between the PBX 16 and the SMP 18.

In this embodiment, the SMP 18 assumes control over both call processing and the media itself. This architecture may be referred to as "First Party Call Control". Many of the media handling functions normally implemented by the PBX 16 are handled by the SMP 18 in this architecture. Incoming calls addressed to any extension or direct dial number within the enterprise, for example, are always first routed to the SMP 18. Thereafter, a call leg is established from the SMP 18 to the called party within the enterprise, and the two legs are bridged. Accordingly, the SMP 18 includes a digital trunk interface 62 and a digital signal processing (DSP) conferencing bridge 64. The DSP conferencing bridge 64 performs the bridging of calls for implementation of various call features, such as conferencing, call transfer, etc. The digital trunk interface 62 may be implemented as a plurality of telephonic cards, e.g. Intel Dialogic cards, interconnected by a bus and operating under the control of a processor. The digital trunk interface 62 may also be partly implemented using a processor module such as, for example, a Host Media Processing (HMP) processor.

The SMP 18 may include various scripts 66 for managing call processing. The scripts 66 are implemented as software modules, routines, functions, etc., stored in non-volatile memory and executed by the processor of the SMP 18. The scripts 66 may implement call flow logic, business logic, user preferences, call service processes, and various feature applications.

Figure 3 shows another embodiment in which the PBX 16 performs the functions of terminating and/or bridging media streams, but call control functions are largely handled by the SMP 18. In this embodiment, the SMP 18 may be referred to as a call control server 18. This architecture may be referred to as "Third-Party Call Control".

The call control server 18 is coupled to the PBX 16, for example through the LAN, enabling packet-based communications and, more specifically, IP-based communications. In one embodiment, communications between the PBX 16 and the call control server 18 are carried out in accordance with SIP. In other words, the call control server 18 uses SIP-based communications to manage the set up, tear down, and control of media handled by the PBX 16. In one example embodiment, the call control server 18 may employ a communications protocol conforming to the ECMA-269 or ECMA-323 standards for Computer Supported Telecommunications Applications (CSTA).

Figure 4 shows yet another embodiment of the enterprise communications system 14. This embodiment reflects the adaptation of an existing set of call processing scripts to an architecture that relies on third-party call control, with separate call control and media handling. The SMP 18 includes a call processing server 74. The call processing server 74 includes the scripts or other programming constructs for performing call handling functions. The SMP 18 also includes a SIP server 72 and a media server 76. The separate SIP server 72 and media server 76 logically separate the call control from media handling. The SIP server 72 interacts with the call processing server 74 using a computer-implemented communications handling protocol, such as one of the ECMA-269 or ECMA-323 standards. These standards prescribe XML based messaging for implementing Computer Supported Telecommunications Applications (CSTA).

The SIPserver 72 interacts with the media server 76 using SIP-based media handling commands. For example, the SIP server 72 and media server 76 may communicate using Media Server Markup Language (MSML) as defined in IETF document Saleem A., "Media Server Markup Language", Internet Draft, draft-saleem-msml-07, August 7, 2008. The media server 76 may be configured to perform Host Media Processing (HMP).

Other architectures or configurations for the enterprise communications system 14 will be appreciated by those ordinarily skilled in the art.

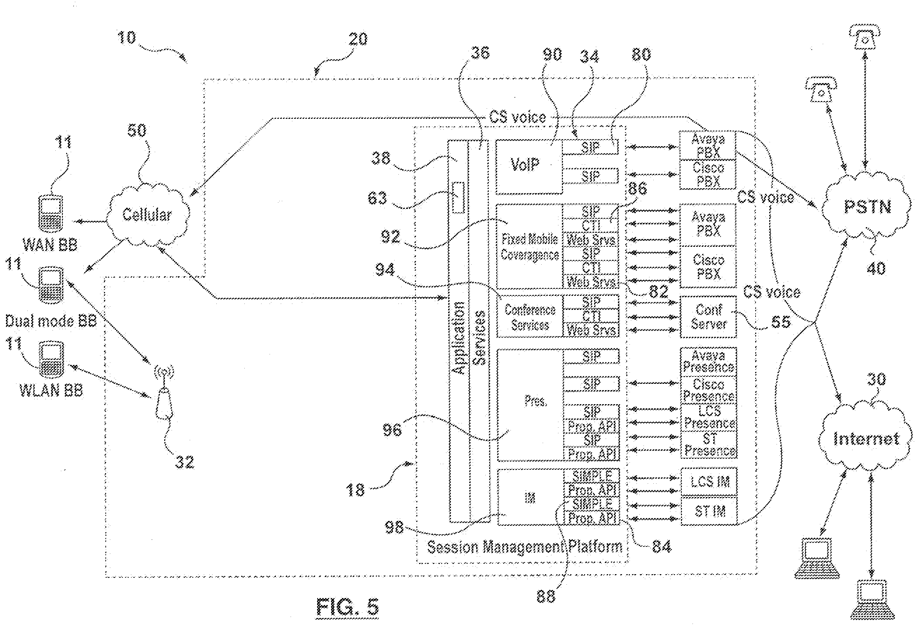

Reference is now made to Figure 5, which shows another embodiment of the enterprise communications system 14 with a Third Party Call Control architecture. In this embodiment, the SMP 18 is a multi-layer platform that includes a protocol layer 34, a services layer 36 and an application layer 38. The protocol layer 34 includes a plurality of interface protocols configured for enabling operation of corresponding applications in the application layer 38. The services layer 36 includes a plurality of services that can be leveraged by the interface protocols to create richer applications. Finally, the application layer 38 includes a plurality of applications that are exposed out to the communication devices and that leverage corresponding ones of the services and interface protocols for enabling the applications.

Specifically, the protocol layer 34 preferably includes protocols which allow media to be controlled separate from data. For example, the protocol layer 34 can include, among other things, a Session Initiation Protocol or SIP 80, a Web Services protocol 82, an Application Programming Interface or API 84, a Computer Telephony Integration protocol or CTI 86, and a Session Initiation Protocol for Instant Messaging and Presence Leveraging Extensions or SIMPLE protocol 88. It is contemplated that the interface protocols 80-88 are plug-ins that can interface directly with corresponding servers in the enterprise network 20, which will be further described below.

Although SIP 80 may be utilized, it is appreciated that the system 10 can operate using the above disclosed or additional protocols. As known by those of ordinary skill in the art, SIP is the IETF (Internet Engineering Task Force) standard for multimedia session management, and more specifically is an application-layer control protocol for establishing, maintaining, modifying and terminating multimedia sessions between two or more endpoints. As further known by those of ordinary skill in the art, the SIP protocol 80 includes two interfaces for signaling: SIP-Trunk (hereinafter referred to as "SIP-T") and SIP-Line (hereinafter referred to as "SIP-L"). Specifically, the SIP-T interface is utilized when the endpoint is a non-specific entity or not registered (i.e., when communicating between two network entities). In contrast, the SIP-L interface is utilized when the endpoint is registered (i.e., when dialing to a specific extension). SIP is defined in J. Rosenberg et al., "RFC 3261 - Session Initiation Protocol" (June 2002), the contents of which are herein incorporated by reference.

The SMP 18 also includes a plurality of enablers, among other things, a VoIP enabler 90, a Fixed Mobile Convergence or FMC enabler 92, a conference services enabler 94, a presence enabler 96 and an Instant Messaging or IM enabler 98. Each of the enablers 90-98 are used by corresponding services in the services layer 36 that combine one or more of the enablers. Each of the applications in the application layer 38 is then combined with one or more of the services to perform the desired application. For example, a phone call service may use the VoIP or PBX enabler, and an emergency response application may use the phone call service, an Instant Messenger service, a video call service, and email service and/or a conference service.

The application layer 38 may include a conference services application 63 that, together with the conference services enabler 94, enables multiple communication devices (including desk telephones and personal computers) to participate in a conference call through use of a centralized conference server 55. As seen in Figure 5, the conference server 55 is provided in the enterprise network 20 and is in communication with the conference services enabler 94 preferably through the SIP protocol 80, although it is recognized that additional protocols that control media separate from data may be appropriate, such as the Web Services protocol 82 or the CTI protocol 86. As will be described in further detail below, the conference call server 55 is configured for directing media and data streams to and from one or more communication devices (i.e., mobile devices 11, telephones 17, and computers 15).

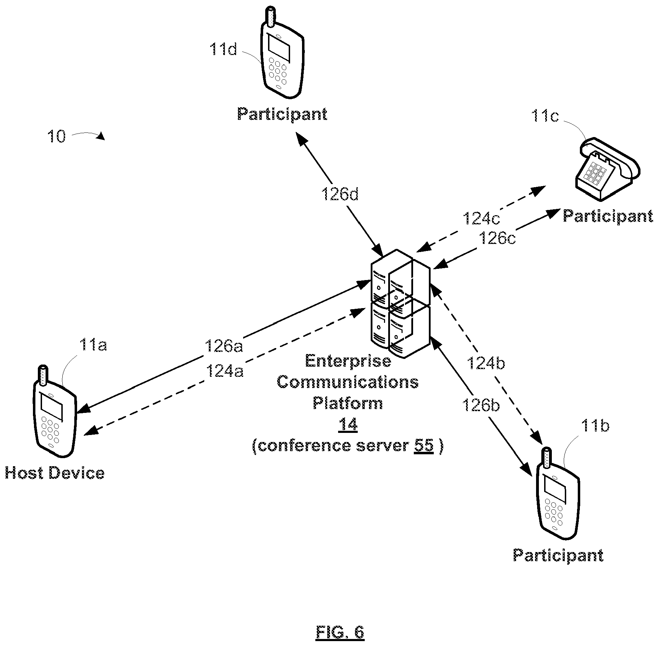

Example conference call systems and methods in accordance with example embodiments will now be described, referring now to Figure 6, which shows the system 10 when used or configured as a conference call system. As shown, the enterprise communications platform 14 includes the conference server 55 for providing conference call services for a number of client devices such as mobile devices 11, illustrated as one designated host device 11a and one or more participant devices 11b, 11c, 11d. The mobile devices 11 may collectively form a conference call group. The host device 11a is generally the mobile device 11 or associated user who schedules and hosts a conference call session, and may for example be permitted to perform such hosting functions as roll call, mute all, broadcast only, conference lock, etc.

The enterprise communications platform 14 and the associated conference server 55 may be used for generally executing conference call functions. As described above, in example embodiments, the enterprise communications platform 14 may include or be coupled to the media server 76 (Figure 4), wherein the enterprise communications platform 14 controls the media handling and media sessions of the media server 76.

Referring still to Figure 6, in order to implement some of the conference call functions described herein, the enterprise communications platform 14 may communicate with the mobile devices 11 by way of media sessions and/or control sessions. Specifically, as shown in Figure 6, the mobile devices 11 communicates via media sessions 126 (shown as solid lines) and control sessions 124 (shown as dashed lines to distinguish from the media sessions 126). For example, the designated host device 11a communicates via media session 126a and control session 124a. Participant device 11b communicates via media session 126b and control session 124b. Participant device 11c communicates via media session 126c and control session 124c. In some embodiments, as shown, the participant device 11d may merely communicate via media session 126d over the PSTN 40 (Figure 1) only (without an associated control session).

In some example embodiments, the media sessions may be facilitated by the enterprise communications platform 14 by way of Real-time Transport Protocol (RTP) media sessions, and may include voice calls, video calls, circuit-switched calls or VoIP calls. In order to generate or establish a conference call session, the enterprise communications platform 14 connects or links at least some of the call legs of each media session 126. The particular methods and processes for connecting of media sessions 126 into a conference call session would be understood by those skilled in the art, which may for example be implemented by media shuffling or SDP (Session Description Protocol) media shuffling, etc.

In some example embodiments, referring now to the control sessions 124, the type of control session generated by the enterprise communications platform 14 may be dependent on the type of mobile device 11, for example including but not limited to what can be referred to as Class A devices, non-Class A devices, and media-only devices. If the mobile device 11 is a Class A device, the control session may for example be established using data-based communications. Such data-based communications includes data messages, SIP-based implementations, e-mail, short-message-service (SMS) text messaging, etc. If the mobile device 11 is a media-only device, the enterprise communications platform 14 may establish the control session by for example using interactive voice response (IVR), which for example receives commands from the mobile device 11 by using both voice commands and touch tone (e.g. Dual-tone multi-frequency (DTMF)). In such an instance, the control session is established by merely establishing the media session with the mobile device 11 (e.g., by calling the mobile device 11), and thereafter communicating using IVR commands. If the mobile device 11 is a non-Class A device, the control session(s) 124 may be first generated using data-based messaging, and subsequently (once a media session is established) using IVR (i.e., using commands through the media session). The particular capabilities of each mobile device 11 may be detected by the enterprise communications platform 14 upon initial communication with each mobile device 11, as is known in the art. Alternatively, the capabilities may be preconfigured within the enterprise communications platform 14 prior to establishment of a conference call session. Communications are subsequently made via the appropriate communications platform or format within the enterprise communications platform 14. In yet further example embodiments of the mobile device 11, the voice or media session can be communicated over the same data connection as the control session (e.g. VoIP).

In some example embodiments, a data connection (e.g. the same data connection as used by the control sessions 124) can be further used to provide additional data sharing between mobile devices 11. For example, during a conference call, the host mobile device 11a may provide or transfer a data file to the remaining mobile devices 11. Data sharing may also include Web Services or sharing of presentation content.

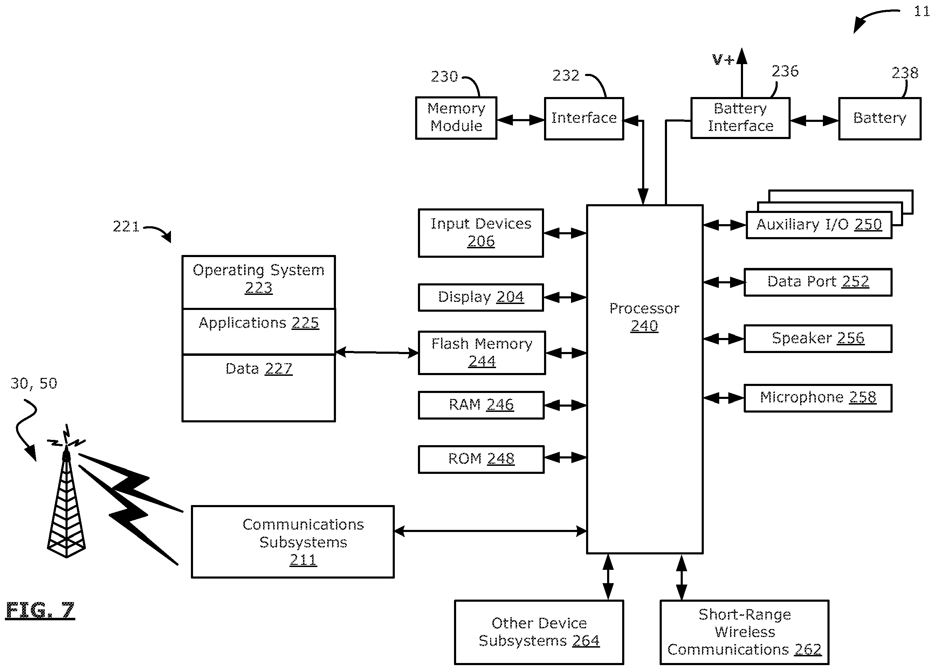

Reference is now made to Figure 7 which illustrates in detail a mobile device 11 in which example embodiments can be applied. The mobile device 11 is a two-way communication device having data and voice communication capabilities, and the capability to communicate with other computer systems, for example, via the Internet. Depending on the functionality provided by the mobile device 11, in various embodiments the mobile device 11 may be a handheld device, a multiple-mode communication device configured for both data and voice communication, a smartphone, a mobile telephone or a PDA (personal digital assistant) enabled for wireless communication.

The mobile device 11 includes a rigid case (not shown) housing the components of the mobile device 11. The internal components of the mobile device 11 may, for example, be constructed on a printed circuit board (PCB). The description of the mobile device 11 herein mentions a number of specific components and subsystems. Although these components and subsystems may be realized as discrete elements, the functions of the components and subsystems may also be realized by integrating, combining, or packaging one or more elements in any suitable fashion. The mobile device 11 includes a controller comprising at least one processor 240 (such as a microprocessor) which controls the overall operation of the mobile device 11. The processor 240 interacts with device subsystems such as a wireless communication subsystem 211 for exchanging radio frequency signals with the wireless network (e.g. WAN 30 and/or PLMN 50) to perform communication functions. The processor 240 interacts with additional device subsystems including a display 204 such as a liquid crystal display (LCD) screen or any other appropriate display, input devices 206 such as a keyboard and control buttons, persistent memory 244, random access memory (RAM) 246, read only memory (ROM) 248, auxiliary input/output (I/O) subsystems 250, data port 252 such as a conventional serial data port or a Universal Serial Bus (USB) data port, speaker 256, microphone 258, short-range communication subsystem 262 (which may employ any appropriate a wireless (e.g., RF), optical, or other short range communications technology), and other device subsystems generally designated as 264. Some of the subsystems shown in Figure 2 perform communication-related functions, whereas other subsystems may provide "resident" or on-device functions.

Display 204 may be realized as a touch-screen display in some embodiments. The touch-screen display may be constructed using a touch-sensitive input surface connected to an electronic controller and which overlays the visible element of display 204. The touch-sensitive overlay and the electronic controller provide a touch-sensitive input device and the processor 240 interacts with the touch-sensitive overlay via the electronic controller.

The wireless communication subsystem 211 includes one or more communication systems for communicating with wireless WAN base stations 30 and wireless LAN access points 32 within the wireless network. The particular design of the wireless communication subsystem 211 depends on the wireless network in which mobile device 11 is intended to operate. The mobile device 11 may send and receive communication signals over the wireless network after the required network registration or activation procedures have been completed.

The processor 240 operates under stored program control and executes software modules 221 stored in memory such as persistent memory 244 or ROM 248. The processor 240 can execute code means or instructions. ROM 248 may contain data, program instructions or both. Persistent memory 244 may contain data, program instructions or both, in some embodiments is rewritable under control of processor 240, and may be realized using any appropriate persistent memory technology, including EEPROM, EAROM, FLASH, and the like. As illustrated in Figure 2, the software modules 221 comprise operating system software 223 and software applications 225.

Software modules 221 or parts thereof may be temporarily loaded into volatile memory such as the RAM 246. The RAM 246 is used for storing runtime data variables and other types of data or information, as will be apparent to those skilled in the art. Although specific functions are described for various types of memory, this is merely one example, and those skilled in the art will appreciate that a different assignment of functions to types of memory could also be used.

The software applications 225 may further include a range of applications, including, for example, an e-mail messaging application, address book, calendar application, notepad application, Internet browser application, voice communication (i.e., telephony) application, mapping application, or a media player application, or any combination thereof. Each of the software applications 225 may include layout information defining the placement of particular fields and graphic elements (e.g., text fields, input fields, icons, etc.) in the user interface (i.e., the display 204) according to the application.

In some embodiments, the auxiliary input/output (I/O) subsystems 250 may comprise an external communication link or interface, for example, an Ethernet connection. The auxiliary I/O subsystems 250 may further comprise one or more input devices, including a pointing or navigational tool such as a clickable trackball or scroll wheel or thumbwheel, or one or more output devices, including a mechanical transducer such as a vibrator for providing vibratory notifications in response to various events on the mobile device 11 (e.g., receipt of an electronic message or incoming phone call), or for other purposes such as haptic feedback (touch feedback).

In some embodiments, the mobile device 11 also includes one or more removable memory modules 230 (typically comprising FLASH memory) and one ore more memory module interfaces 232. Among possible functions of the removable memory module 230 is to store information used to identify or authenticate a user or the user's account to wireless network (e.g. WAN 30 and/or PLMN 50). For example, in conjunction with certain types of wireless networks, including GSM and successor networks, the removable memory module 230 is referred to as a Subscriber Identity Module or SIM. The memory module 230 is inserted in or connected to the memory module interface 232 of the mobile device 11 in order to operate in conjunction with the wireless network.

The mobile device 11 stores data 227 in a persistent memory 244. In various embodiments, the data 227 includes service data comprising information required by the mobile device 11 to establish and maintain communication with the wireless network (e.g. WAN 30 and/or PLMN 50). The data 227 can also include, for example, scheduling and connection information for connecting to a scheduled call.

The mobile device 11 also includes a battery 238 which furnishes energy for operating the mobile device 11. The battery may be coupled to the electrical circuitry of mobile device 11 through a battery interface 236, which may manage such functions as charging the battery from an external power source (not shown) and the distribution of energy to various loads within or connected to the mobile device 11. Short-range communication subsystem 262 is an additional optional component which provides for communication between the mobile device 11 and different systems or devices, which need not necessarily be similar devices. For example, the short-range communication subsystem 262 may include an infrared device and associated circuits and components, or a wireless bus protocol compliant communication mechanism such as a BLUETOOTH communication module to provide for communication with similarly-enabled systems and devices.

A predetermined set of applications that control basic device operations, including data and possibly voice communication applications will normally be installed on the mobile device 11 during or after manufacture. Additional applications and/or upgrades to the operating system software 223 or software applications 225 may also be loaded onto the mobile device 11 through the wireless network (e.g. WAN 30 and/or PLMN 50), the auxiliary I/O subsystem 250, the data port 252, the short-range communication subsystem 262, or other suitable subsystem such as 264. The downloaded programs or code modules may be permanently installed, for example, written into the program memory (e.g., the persistent memory 244), or written into and executed from the RAM 246 for execution by the processor 240 at runtime.

The mobile device 11 may provide two principal modes of communication: a data communication mode and an optional voice communication mode. In the data communication mode, a received data signal such as a text message, an e-mail message, Web page download, or an image file will be processed by the wireless communication subsystem 211 and input to the processor 240 for further processing. For example, a downloaded Web page may be further processed by a browser application or an e-mail message may be processed by an e-mail message messaging application and output to the display 204. A user of the mobile device 11 may also compose data items, such as e-mail messages, for example, using the input devices in conjunction with the display 204. These composed items may be transmitted through the wireless communication subsystem 211 over the wireless network (e.g. WAN 30 and/or PLMN 50). In the voice communication mode, the mobile device 11 provides telephony functions and operates as a typical cellular phone.

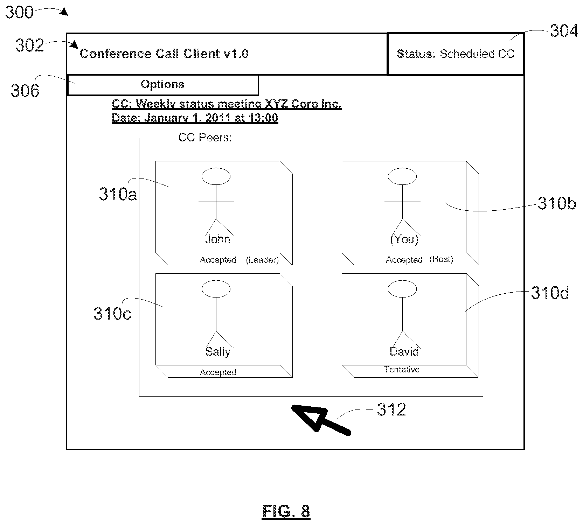

Reference is now made to Figure 8, which shows a user interface 300 displayed on the display 204 for providing conference call functions, in accordance with an example embodiment. In the example embodiment shown, the user interface 300 is for example implemented by a conference call application (as a stand-alone or in combination with other applications) resident on the mobile device 11 for specifically communicating with the enterprise communications platform 14. The user interface 300 may form part of a conference call session scheduling process.

Still referring to Figure 8, the user interface 300 relates to a scheduled conference call session having a subject and which is to occur at a scheduled time and date. For example, the time and date of the schedule conference call session may be stored within the conference call application or a calendar application. For example, the scheduled conference call has a subject field of "Weekly status meeting XYZ Corp Inc." and has a scheduled date field of "January 1, 2011 at 13:00". The user interface 300 may be manually triggered by launching and subsequently operating the conference call application.

As shown in Figure 8, the user interface 300 also includes an options menu 306 to perform functions such as editing the existing scheduled conference call, scheduling new conference calls, and inviting new participants. Conference call information is sent from the device 11 to the enterprise communications platform 14, which stores the information in a memory and sends an invite to the specified participants with the conference call information. At the time of the scheduled conference call, the enterprise communications platform 14 may contact each of the devices 11 to join the media sessions together. The devices 11 may also dial or link into the enterprise communications platform 14 using dialing or link information received during scheduling.

As shown in Figure 8, the user interface 300 includes a title bar 302, a status icon 304, an options menu 306, and participant icons (each or individually 310) which represent the status of each participant for the conference call. The participant icons 310 can, for example, be a photo or avatar of the individual. A cursor 312 is also shown for indicating which item(s) on the user interface 300 are to be selected (e.g., controllable by a user input device such as a touchscreen, touch scrollball or mouse). The status icon 304 displays the present status of the conference call, for example "Scheduled CC" (Conference Call) as shown.

Referring now to the participant icons 310, in the example shown, the user interface 300 is displayed on the host device 11a, indicated as "You - Host" as shown in icon 310b. Another participant icon 310a can be designated as the leader device 11, typically for the participant individual who will be doing the majority of the speaking, for example "John - Leader" as shown. The remaining participant icons 310c, 310d represent additional participant devices 11 ("Sally" and "David", respectively, as shown). The status of each participant icon 310 can also be shown, for example, as Accepted, Tentative, or Declined.

Generally, as part of the conference call session scheduling process, the enterprise communications platform 14 communicates with each device 11. Each device 11 has an option to Accept, Decline, or Tentative. If the device 11 selects Accept, this means that the device 11 will participate in the scheduled conference call. If the device 11 selects Decline, for example, the host device 11a is notified by the enterprise communications platform 14 that the scheduled conference call has been declined by the particular device 11. The notification may be made by phone call, data message, email, etc. If the host device 11a Declines, then the entire scheduled conference call may be cancelled and the other devices 11 notified accordingly. If the device 11 selects Tentative, then the enterprise communications platform 14 notifies the host device 11a accordingly.

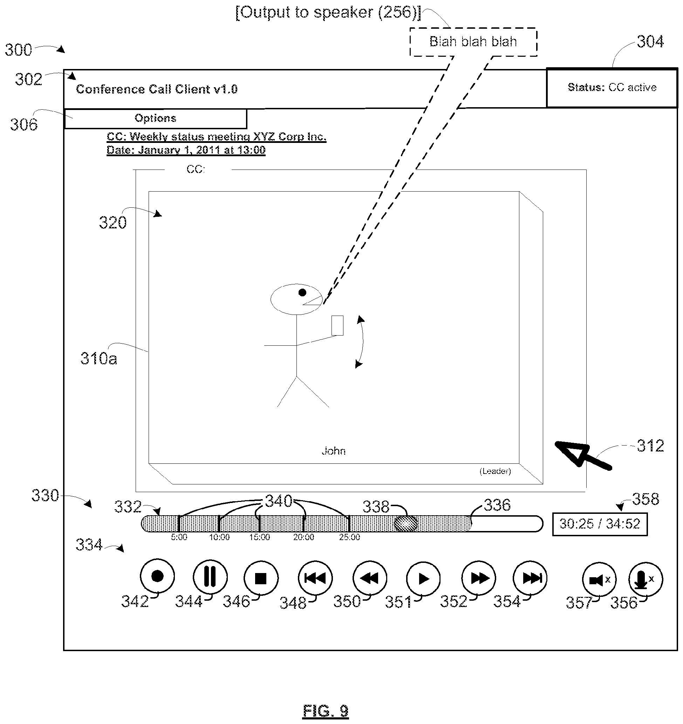

Reference is now made to Figure 9, which shows the user interface 300 as displayed on the host device 11a when a conference call session is active. Thus, the status icon 304 displays "CC Active", as shown. As shown, a video of one or more of the participants (e.g. "John", as shown) is shown in a video screen 320. In an example embodiment, the video screen 320 can be embedded within the participant icon 310a, as shown. In an alternate embodiment, more than one video screen is shown wherein each participant icon 310 can display a respective video screen (not shown). Audio content from the conference call is also output through the speaker 256. In some example embodiments, the video screen 320 can further be used to display shared data which may include Web Services or sharing of presentation content.

As shown in Figure 9, in some example embodiments, an additional output control interface 330 may be displayed on the user interface 300 for the user to provide recording and output control instructions and commands with respect to the present conference call. The output control interface 330 includes a time bar 332 and a number of control icons 334. Generally, the conference call session includes conference call content such as video, audio, or data files (e.g. a shared presentation). The conference call content is associated with time indicators. For example, each content frame can be saved and associated with a given time indicator, such as every millisecond.

Referring still to Figure 9, the time bar 332 includes a conference call current time indicator 336, a device display time indicator (shown as a "puck" 338), and one or more bookmarks 340.

The puck 338 represents the conference call content currently being displayed on the screen 320 of the device 11. This content on the screen 320 may lag behind the content being exchanged or viewed by the other participants within the conference call. The puck 338 can be controlled by directly selecting or clicking any part of the time bar 332 (e.g. using the cursor 312); or by selecting and holding the cursor 312 onto the puck 338 and sliding along the time bar 332. As shown in time display 358, there is also a numerical time displayed which corresponds to the device display time indicator of the puck (e.g., shown as time 30:25 in Figure 9). In the example shown, the time shown in time display 358 can be relative to the conference call session wherein 0:00 represents the start of the call (e.g. in the format of hours:minutes:seconds). In other example embodiments, the time shown in time display 358 can show times of the actual date and time of the conference call, e.g., using Greenwich Mean Time (GMT).

The conference call current time indicator 336 shows the progress of the present conference call session, which may have advanced further than the content currently being displayed on the device 11 (as shown). As shown in time display 358, there is also a numerical time displayed which corresponds to the conference call current time indicator 336 (e.g., shown as time 34:52 in Figure 9).

The bookmarks 340 are shortcuts which are specified time indicators which allow the device 11 to readily retrieve conference call content starting from those specified time indicators. For example, the bookmarks 340 may be specified to be located at a specified time interval, for example every 5 minutes of the conference call session. The bookmarks 340 may also be manually specified by the host 11a or other participant, for example to denote or flag a time of particular interest during the conference call. This assists the participants in navigating through the conference call content without having to sample through the entire conference call session. As a default, the bookmarks 340 are tagged with a specific time (e.g. 5:00; 10:00, 15:00, etc., as shown). In other embodiments, the bookmarks 340 may further be manually or automatically tagged by the host 11a using appropriate tags or labels based on what was discussed during the conference call, for example "Agenda item 1 discussed here" (not shown). The bookmarks 340 may be used to provide a single action response to the user input.

Referring still to Figure 9, the control icons 334 include, for example, a record icon 342, a pause icon 344, a stop icon 346, a beginning icon 348, a rewind icon 350, a play icon 351, a forward icon 352, an end icon 354, a mute icon 356 and mute speaker icon 357. Volume and signal strength indicators (not shown) may also be displayed and set by the user.

In some example embodiments, when displaying any content other than associated with the conference call current time indicator 336, the device 11 may enter a mute mode as represented by mute icon 356, which turns off the microphone 258 to prevent accidental participation by the user out of context.

The play icon 351 can be selected to enter a play mode, wherein the device 11 outputs the content associated with the device display time indicator or 338. Typically, this includes displaying such content on the video screen 320.

The record icon 342 can be manually toggled on and off to operate the device 11 in a record mode. When in record mode, the client device 11 and/or the enterprise communications platform 14 stores the conference call content in a memory with associate time indicators. In some example embodiments, the record mode is automatically activated or toggled based on the particular mode of operation of the device 11, as further described in detail below. In some further example embodiments, the recording to the enterprise communications platform 14 can only be controlled by an administrator or by the host device 11a.

Some mobile devices 11 have a limited size capacity in the memory 244. In some example embodiments, in the record mode the memory 244 of the device 11 can be used as a cache to store some but not all of the conference call content in the memory 244. For example, the device 11 can store content in the memory 224 associated with time indicators within a specified time interval, for example within the last three minutes. Any content prior to three minutes is deleted to allow for the more recent content to be accessed and to save system resources. In such an embodiment, the enterprise communications platform 14 may still store the entire conference call session in the associated memory.

Referring still to Figure 9, selection of the pause icon 344 causes the device 11 to enter a pause mode to display and maintain (freeze) only the content associated with the puck 338. Although not displayed in the video screen 320, the device 11 and/or the enterprise communications platform 14 would still store the ongoing conference call content within the memory while in pause mode. The pause mode also causes the device 11 to enter the record mode (if not already recording). When in pause mode, the device 11 also enters the mute mode. To exit the pause mode and enter the play mode, the play icon 351 can be selected. In some example embodiments, when the pause mode exited, the record mode and/or the mute mode may also be exited.

Selection of the stop icon 346 causes the device 11 to be in a stop mode, which may stop displaying content onto the video screen 320 and exit the conference call session. In some example embodiments, the device 11 and/or the enterprise communications platform 14 may still store the ongoing conference call content within the memory while in stop mode.

Selection of the beginning icon 348 causes the device 11 to display content from the beginning of the conference call session, for example, starting from 0:00. The device 11 and/or the enterprise communications platform 14 would still store the ongoing conference call content within the memory.

Selection of the rewind icon 350 causes the device 11 to display content starting from the most recent bookmark 340. In another example embodiment, selection of the rewind icon 350 causes the device 11 to display short segments of content, each earlier than the next and prior to the current time indicator 336. The play icon 351 can be selected when the desired time indicator is reached. The device 11 and/or the enterprise communications platform 14 would still store the ongoing conference call content within the memory while rewinding.

Selection of the forward icon 352 causes the device 11 to display content starting from the next bookmark 340. Of course, the forward 352 can only be used when the puck 338 is earlier than the current time indicator 336. In another example embodiment, selection of the forward icon 352 causes the device 11 to display short segments of content, each later than the next. The play icon 351 can be selected when the desired time indicator is reached.

Selection of the end icon 354 causes the device 11 to display the content associated with the current time indicator 336. The puck 338 moves to the current time indicator 336 in response.

In some example embodiments, for non-Class A devices or voice-only devices, the rewind and forward functions may be performed using IVR, touch-tone or DTMF commands, e.g. by pressing "4" to rewind and "6" to forward. The audio content associated with the previous bookmark 340 or next bookmark 340, respectively, would be played from that bookmark 340.

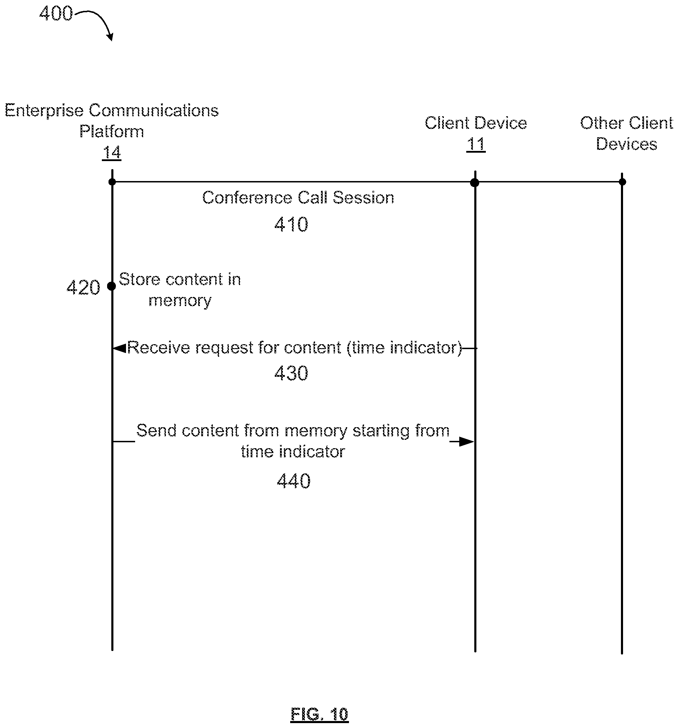

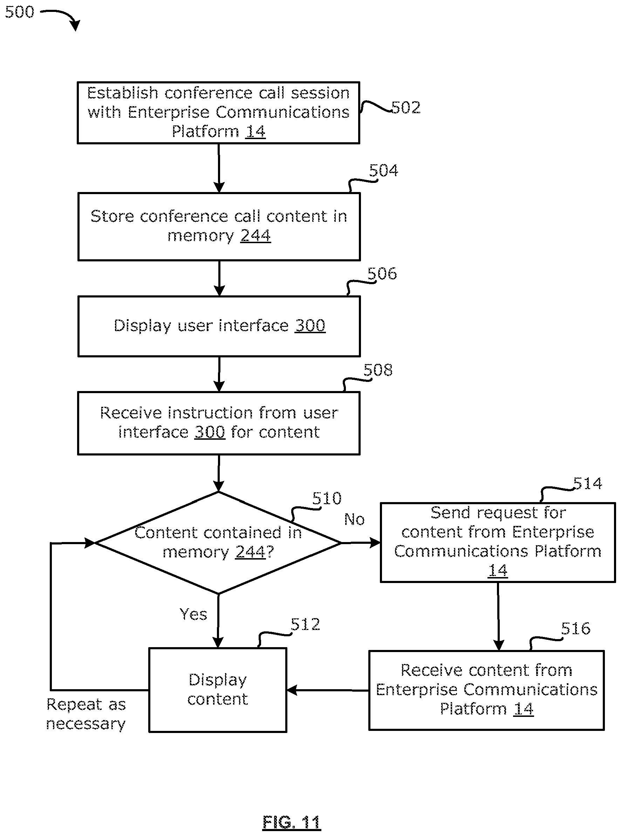

Specific implementations of recording and output control of a conference call in accordance with some example embodiments will now be described, referring now to Figures 10 to 11. Figure 10 shows an example conversation 400 between the enterprise communications platform 14 and a client device 11 for storing a conference call session within the enterprise communications platform 14, in accordance with an example embodiment. Figure 11 shows an example flow diagram 500 for storing a conference call session within a client device 11 in accordance with another example embodiment.

Referring to Figure 10, the conversation 400 generally illustrates the process of the enterprise communications platform 14 when storing a conference call session. At step 410, the enterprise communications platform 14 establishes a conference call session with one or more devices 11. This typically involves establishing media session legs and connecting the media session legs together. The conference call session is associated with time indicators (including a current time indicator 336). For example, all the received conference call content is associated with a respective time indicator (such as every millisecond). At step 420, during the conference call session, the enterprise communications platform 14 stores in a memory any received conference call content from the conference call session along with the associated time indicators. At this stage, the enterprise communications platform 14 may also store specified time indicators (e.g. bookmarks 340). At step 430, the enterprise communications platform 14 receives a request from the client device 11 for content, typically by way of identifying a time indicator. In response, the enterprise communications platform 14 sends conference call content to the client device starting from the identified time indicator, which can occur prior to the current time indicator 336. In other example embodiments, referring to step 430, the request may also be triggered by other factors such as disconnection due to loss of coverage.

Reference is now made to Figure 11, which shows the flow diagram 500 of the client device 11 when recording or storing a conference call session. At step 502, the client device 11 establishes a conference call session with the enterprise communications platform 14 (which connects media with one or more other devices). The conference call session is associated with time indicators (including a current time indicator 336). At step 504, during the conference call session, the client device 11 stores in the memory 244 any received conference call content from the conference call session along with the associated time indicators. At this stage, the client device 11 may also store specified time indicators (e.g. bookmarks 340). At step 506, the client device 11 provides an interface, for example by displaying user interface 300 having a number of control icons 334. At step 508, the user interface 300 receives selection of one of the control icons 334, which can include a request for conference call content associated with an identified time indicator. At step 510, the client device 11 determines whether the content at the identified time indicator is already stored in the memory 244. If not ("no"), at step 514 the client device sends a request to the enterprise communications platform 14 for content, typically by way of identifying a time indicator. This situation could occur if the requested content is beyond a cache time interval of the memory 244 of the device 11, if the device 11 lost connection to the conference call session, or if the device 11 was simply not in record mode. In response, at step 516 the enterprise communications platform 14 sends conference call content to the client device starting from the identified time indicator, which can occur prior to the current time indicator 336. This content is output or otherwise displayed on the device 11 at step 512.

If the client device 11 determines that the content at the identified time indicator is already stored in the memory 244 ("yes"), at step 512 the device retrieves the content from memory 244 and displays the content. The flow diagram can repeat to step 510, which checks again whether the content at the identified time indicator is already stored in the memory 244.

Variations of the above example methods may be used. While some of the above examples have been described as occurring in a particular order, it will be appreciated to persons skilled in the art that some of the messages or steps or processes may be performed in a different order provided that the result of the changed order of any given step will not prevent or impair the occurrence of subsequent steps. Furthermore, some of the messages or steps described above may be removed or combined in other embodiments, and some of the messages or steps described above may be separated into a number of sub-messages or substeps in other embodiments. Even further, some or all of the steps of the conversations may be repeated, as necessary. Elements described as methods or steps similarly apply to systems or subcomponents, and vice-versa.

In particular, it can be appreciated that the conference call content may be stored in a memory of either the client device 11 or the enterprise communications platform 14, or both. Accordingly, a combination or sub-combination of the methods shown in Figures 10 and 11 may be used. In a further embodiment, the conference call content may be stored in a third party client device, for transmittal to the client device upon request.

In some example embodiments, the client device 11 may join a conference call session which is already in progress. The client device 11 can then request and receive some or all of the content to-date from the enterprise communications platform 14 once connected to the conference call session. The client device 11 can then play the content from the beginning (0:00), wherein the user could forward as desired until caught up to the current time indicator 336.

In some example embodiments, if a participant is unexpectedly dropped from a conference call, for example due to loss of coverage, the client device 11 can bookmark where the call was dropped and when connectivity is restored the client device 11 can begin to play the call by accessing the cached store on the server, allowing the user to catch up to the current time indicator 336 of the conference call without disturbing other participants. If the conference call cache is stored on the client device 11, the cache can serve as a buffer for short network outages. The conference call stream can be pre-fetched and stored on the client device 11 allowing the participant a continuous presentation of the conference even if the connectivity to the network is lost for a short period of time.

Some of the above examples may be referred to as a mobile terminated server initiated call sequence (and may sometimes also be referred to as "server dial out"). Alternatively, depending on the particular application, some or all of the examples could be mobile originated mobile initiated, mobile originated server initiated, or mobile terminated mobile initiated, as would be understood by those skilled in the art.

Variations may be made to some example embodiments, which may include combinations and sub-combinations of any of the above. The various embodiments presented above are merely examples and are in no way meant to limit the scope of this disclosure. Variations of the innovations described herein will be apparent to persons of ordinary skill in the art having the benefit of the present disclosure, such variations being within the intended scope of the present disclosure. In particular, features from one or more of the above-described embodiments may be selected to create alternative embodiments comprised of a sub-combination of features which may not be explicitly described above. In addition, features from one or more of the above-described embodiments may be selected and combined to create alternative embodiments comprised of a combination of features which may not be explicitly described above. Features suitable for such combinations and sub-combinations would be readily apparent to persons skilled in the art upon review of the present disclosure as a whole. The subject matter described herein intends to cover and embrace all suitable changes in technology. Therefore the scope of protection of the present invention is only defined by the appended claims.

## Claims

1. A method for recording a conference call session established between a client device (11) and a server device (14), the conference call session being associated with time indicators including a current time indicator (336), the method comprising:
storing (504) in a memory conference call content from the conference call session along with associated time indicators;
receiving (508) an instruction through an interface (300) of the client device (11) during the conference call session, wherein the instruction is generated based on a puck being moved to a position on a time bar (332), the time bar includes one or more specified time indicators of the associated time indicators for providing corresponding conference call content and the position on the time bar is associated with a particular time indicator of the associated time indicators, the one or more specified time indicators being different from time indicators corresponding to a start time and an end time of the conference call; and
outputting (512) on the client device (11), in response to receiving the instruction, the stored conference call content associated with the particular time indicator, wherein the particular time indicator is prior to the current time indicator (336),
wherein the client device (11) includes the memory;
the method is **characterised by** storing in the memory only conference call content associated with the time indicators within a predetermined time interval; and deleting any remaining conference call content from the memory.

2. The method as claimed in claim 1, wherein the server device (14) includes the memory, further comprising sending a request for the conference call content from the server device (14).

3. The method as claimed in claims 1 or 2, wherein the conference call content stored in memory is associated with specified time indicators for providing conference call content in response to a single action input to the interface (300).

4. The method as claimed in claim 3, wherein the specified time indicators include bookmarks (340).

5. The method as claimed in anyone of claims 1 to 4, further comprising muting a microphone of the client device (11) in response to receiving the instruction.

6. The method as claimed in anyone of claims 1 to 5, further comprising providing a pause option to the interface (300) during the conference call session.

7. The method as claimed in anyone of claims 1 to 6, further comprising providing a rewind option to the interface (300) during the conference call session.

8. The method as claimed in anyone of claims 1 to 7, wherein said outputting further comprises displaying the outputted conference call content on a display (204) of the client device (11).

9. The method as claimed in anyone of claims 1 to 8, wherein the conference call content includes audio, video, or data content.

10. A conference call system comprising:
a client device (11) having a controller and a communications module for establishing a conference call session with a server device (14), the conference call session being associated with time indicators including a current time indicator (336);
a memory for storing conference call content from the conference call session along with associated time indicators;
an interface (300) on the client device (11) for receiving an instruction during the conference call session, wherein the instruction is generated based on a puck being moved to a position on a time bar (332), the time bar includes one or more specified time indicators of the associated time indicators for providing corresponding conference call content and the position on the time bar is associated with a particular time indicator of the associated time indicators, the one or more specified time indicators being different from time indicators corresponding to a start time and an end time of the conference call; and
an output on the client device for outputting, in response to receiving the instruction, the stored conference call content associated with the particular time indicator, wherein the particular time indicator is prior to the current time indicator (336),
wherein the client device (11) includes the memory; and
**characterised in that** in the memory only conference call content associated with the time indicators within a predetermined time interval is stored, and any remaining conference call content is deleted from the memory.

11. The conference call system as claimed in claim 10, wherein the client device (11) is a handheld mobile communication device.

12. A non-transitory computer readable medium having recorded thereon statements and instructions for execution by one or more devices for recording a conference call session established between a client device (11) and a server device (14), the conference call session being associated with time indicators including a current time indicator (336), said statements and instructions comprising:
code means for performing the method of anyone of claims 1 to 9.

## Patentansprüche

1. Verfahren zum Aufzeichnen einer Konferenzverbindungssitzung, die zwischen einer Client-Vorrichtung (11) und einer Server-Vorrichtung (14) hergestellt ist, wobei die Konferenzverbindungssitzung mit Zeitindikatoren assoziiert ist, die einen aktuellen Zeitindikator (336) umfassen, wobei das Verfahren aufweist:
Speichern (504) von Konferenzverbindungsinhalt von der Konferenzverbindungssitzung zusammen mit assoziierten Zeitindikatoren in einem Speicher;
Empfangen (508) einer Anweisung über eine Schnittstelle (300) der Client-Vorrichtung (11) während der Konferenzverbindungssitzung, wobei die Anweisung basierend auf einem Verschieben eines Pucks zu einer Position auf einer Zeitleiste (332) erzeugt wird, wobei die Zeitleiste einen oder mehrere spezifizierte Zeitindikatoren der assoziierten Zeitindikatoren zum Vorsehen eines entsprechenden Konferenzverbindungsinhalts umfasst und die Position auf der Zeitleiste mit einem bestimmten Zeitindikator der assoziierten Zeitindikatoren assoziiert ist, wobei der eine oder die mehreren spezifizierten Zeitindikatoren verschieden sind von Zeitindikatoren, die einer Startzeit und einer Endzeit der Konferenzverbindung entsprechen; und
Ausgeben (512) auf der Client-Vorrichtung (11), in Reaktion auf ein Empfangen der Anweisung, des gespeicherten Konferenzverbindungsinhalts, der mit dem bestimmten Zeitindikator assoziiert ist, wobei der bestimmte Zeitindikator vor dem aktuellen Zeitindikator (336) ist,
wobei die Client-Vorrichtung (11) den Speicher umfasst;
wobei das Verfahren **gekennzeichnet ist durch** Speichern nur von Konferenzverbindungsinhalt, der mit den Zeitindikatoren assoziiert ist, innerhalb eines vorgegebenen Zeitintervalls in dem Speicher; und Löschen von verbleibendem Konferenzverbindungsinhalt aus dem Speicher.

2. Das Verfahren gemäß Anspruch 1, wobei die Server-Vorrichtung (14) den Speicher umfasst, weiter aufweisend ein Senden einer Anforderung hinsichtlich des Konferenzverbindungsinhalts von der Server-Vorrichtung (14).

3. Das Verfahren gemäß den Ansprüchen 1 oder 2, wobei der in dem Speicher gespeicherte Konferenzverbindungsinhalt mit spezifizierten Zeitindikatoren zum Vorsehen von Konferenzverbindungsinhalt in Reaktion auf eine einzelne Aktionseingabe in die Schnittstelle (300) assoziiert ist.

4. Das Verfahren gemäß Anspruch 3, wobei die spezifizierten Zeitindikatoren Lesezeichen (340) umfassen.

5. Das Verfahren gemäß einem der Ansprüche 1 bis 4, das weiter ein Stummschalten eines Mikrofons der Client-Vorrichtung (11) in Reaktion auf ein Empfangen der Anweisung aufweist.

6. Das Verfahren gemäß einem der Ansprüche 1 bis 5, das weiter ein Vorsehen einer Pausenoption für die Schnittstelle (300) während der Konferenzverbindungssitzung aufweist.

7. Das Verfahren gemäß einem der Ansprüche 1 bis 6, das weiter ein Vorsehen einer Rückspuloption für die Schnittstelle (300) während der Konferenzverbindungssitzung aufweist.

8. Das Verfahren gemäß einem der Ansprüche 1 bis 7, wobei das Ausgeben weiter ein Anzeigen des ausgegebenen Konferenzverbindungsinhalts auf einer Anzeige (204) der Client-Vorrichtung (11) aufweist.

9. Das Verfahren gemäß einem der Ansprüche 1 bis 8, wobei der Konferenzverbindungsinhalt Audio-, Video- oder Daten-Inhalt umfasst.

10. Konferenzverbindungsystem, das aufweist:
eine Client-Vorrichtung (11) mit einer Steuervorrichtung und einem Kommunikationsmodul zum Herstellen einer Konferenzverbindungssitzung mit einer Server-Vorrichtung (14), wobei die Konferenzverbindungssitzung mit Zeitindikatoren assoziiert ist, die einen aktuellen Zeitindikator (336) umfassen;
einen Speicher zum Speichern von Konferenzverbindungsinhalt von der Konferenzverbindungssitzung zusammen mit assoziierten Zeitindikatoren;
eine Schnittstelle (300) auf der Client-Vorrichtung (11) zum Empfangen einer Anweisung während der Konferenzverbindungssitzung, wobei die Anweisung basierend auf einem Verschieben eines Pucks zu einer Position auf einer Zeitleiste (332) erzeugt wird, wobei die Zeitleiste einen oder mehrere spezifizierte Zeitindikatoren der assoziierten Zeitindikatoren zum Vorsehen eines entsprechenden Konferenzverbindungsinhalts umfasst und die Position auf der Zeitleiste mit einem bestimmten Zeitindikator der assoziierten Zeitindikatoren assoziiert ist, wobei der eine oder die mehreren spezifizierten Zeitindikatoren verschieden sind von Zeitindikatoren, die einer Startzeit und einer Endzeit der Konferenzverbindung entsprechen; und
einen Ausgang der Client-Vorrichtung zum Ausgeben, in Reaktion auf ein Empfangen der Anweisung, des gespeicherten Konferenzverbindungsinhalts, der mit dem bestimmten Zeitindikator assoziiert ist, wobei der bestimmte Zeitindikator vor dem aktuellen Zeitindikator (336) ist,
wobei die Client-Vorrichtung (11) den Speicher umfasst; und
**dadurch gekennzeichnet, dass** in dem Speicher nur Konferenzverbindungsinhalt, der mit den Zeitindikatoren assoziiert ist, innerhalb eines vorgegebenen Zeitintervalls gespeichert ist und verbleibender Konferenzverbindungsinhalt aus dem Speicher gelöscht wird.

11. Das Konferenzverbindungsystem gemäß Anspruch 10, wobei die Client-Vorrichtung (11) eine handgehaltene mobile Kommunikationsvorrichtung ist.

12. Nichtflüchtiges computerlesbares Medium, auf dem Aussagen und Anweisungen zur Ausführung durch eine oder mehrere Vorrichtungen zum Aufzeichnen einer zwischen einer Client-Vorrichtung (11) und einer Server-Vorrichtung (14) hergestellten Konferenzverbindungssitzung aufgezeichnet sind, wobei die Konferenzverbindungssitzung mit Zeitindikatoren assoziiert ist, die einen aktuellen Zeitindikator (336) umfassen, wobei die Aussagen und Anweisungen aufweisen:
Codemittel zum Durchführen des Verfahrens gemäß einem der Ansprüche 1 bis 9.

## Revendications

1. Procédé d'enregistrement d'une session d'appel de conférence établie entre un dispositif client (11) et un dispositif serveur (14), la session d'appel de conférence étant associée à des indicateurs d'horaires incluant un indicateur d'horaire actuel (336), ce procédé comprenant :
la sauvegarde (504) dans une mémoire d'un contenu d'appel de conférence à partir de la session d'appel de conférence en même temps que des indicateurs d'horaires associés ;
la réception (508) d'une instruction par l'intermédiaire d'une interface (300) du dispositif client (11) pendant la session d'appel de conférence, l'instruction étant générée à partir d'une rondelle qui est déplacée jusqu'à une position sur une barre horaire (332), la barre horaire incluant un ou plusieurs indicateurs d'horaires spécifiés parmi les indicateurs d'horaires associés pour fournir un contenu d'appel de conférence correspondant et la position sur la barre horaire étant associée à un indicateur d'horaire particulier parmi les indicateurs d'horaires associés, l'indicateur ou les plusieurs indicateurs d'horaires spécifiés étant différents d'indicateurs d'horaires correspondant à une heure de début et une heure de fin de l'appel de conférence ; et
l'édition (512) sur le dispositif client (11), en réponse à la réception de l'instruction, du contenu d'appel de conférence sauvegardé associé à l'indicateur d'horaire particulier, l'indicateur d'horaire particulier étant antérieur à l'indicateur d'horaire actuel (336),
le dispositif client (11) incluant la mémoire ;
le procédé étant **caractérisé par** la sauvegarde dans la mémoire seulement du contenu d'appel de conférence associé aux indicateurs d'horaires dans un intervalle horaire prédéterminé ; et l'effacement de tout contenu d'appel de conférence restant de la mémoire.

2. Procédé selon la revendication 1, dans lequel le dispositif serveur (14) inclut la mémoire, comprenant en outre l'envoi d'une requête pour le contenu d'appel de conférence provenant du dispositif serveur (14).

3. Procédé selon la revendication 1 ou 2, dans lequel le contenu d'appel de conférence sauvegardé dans la mémoire est associé à des indicateurs d'horaires spécifiés pour fournir un contenu d'appel de conférence en réponse à une entrée d'action unique dans l'interface (300) .

4. Procédé selon la revendication 3, dans lequel les indicateurs d'horaires spécifiés incluent des signets (340) .

5. Procédé selon l'une quelconque des revendications 1 à 4, comprenant en outre la mise en muet d'un micro du dispositif client (11) en réponse à la réception de l'instruction.

6. Procédé selon l'une quelconque des revendications 1 à 5, comprenant en outre la prévision d'une option de pause pour l'interface (300) pendant la session d'appel de conférence.

7. Procédé selon l'une quelconque des revendications 1 à 6, comprenant en outre la prévision d'une option de rembobinage pour l'interface (300) pendant la session d'appel de conférence.

8. Procédé selon l'une quelconque des revendications 1 à 7, dans lequel ladite édition comprend en outre l'affichage du contenu d'appel de conférence édité sur un afficheur (204) du dispositif client (11).

9. Procédé selon l'une quelconque des revendications 1 à 8, dans lequel le contenu d'appel de conférence inclut un contenu audio, vidéo ou de données.

10. Système d'appel de conférence comprenant :
un dispositif client (11) comportant une commande et un module de communication pour établir une session d'appel de conférence avec un dispositif serveur (14), la session d'appel de conférence étant associée à des indicateurs d'horaires incluant un indicateur d'horaire actuel (336) ;
une mémoire servant à sauvegarder un contenu d'appel de conférence à partir de la session d'appel de conférence en même temps que des indicateurs d'horaires associés ;
une interface (300) du dispositif client (11) destinée à recevoir une instruction pendant la session d'appel de conférence, l'instruction étant générée à partir d'une rondelle qui est déplacée jusqu'à une position sur une barre horaire (332), la barre horaire incluant un ou plusieurs indicateurs d'horaires spécifiés parmi les indicateurs d'horaires associés pour fournir un contenu d'appel de conférence correspondant et la position sur la barre horaire étant associée à un indicateur d'horaire particulier parmi les indicateurs d'horaires associés, l'indicateur ou les plusieurs indicateurs d'horaires spécifiés étant différents d'indicateurs d'horaires correspondant à une heure de début et une heure de fin de l'appel de conférence ; et
une sortie sur le dispositif client pour éditer, en réponse à la réception de l'instruction, le contenu d'appel de conférence sauvegardé associé à l'indicateur d'horaire particulier, l'indicateur d'horaire particulier étant antérieur à l'indicateur d'horaire actuel (336),
le dispositif client (11) incluant la mémoire ;
**caractérisé en ce que**, dans la mémoire, seul le contenu d'appel de conférence associé aux indicateurs d'horaires dans un intervalle horaire prédéterminé est sauvegardé et que tout contenu d'appel de conférence restant est effacé de la mémoire.

11. Système d'appel de conférence selon la revendication 10, dans lequel le dispositif client (11) est un dispositif de communication mobile portable.

12. Support non transitoire lisible par ordinateur sur lequel sont enregistrés des états et des instructions destinées à être exécutées par un ou plusieurs dispositifs pour enregistrer une session d'appel de conférence établie entre un dispositif client (11) et un dispositif serveur (14), la session d'appel de conférence étant associée à des indicateurs d'horaires incluant un indicateur d'horaire actuel (336), lesdits états et instruction comprenant :
un moyen de codage pour réaliser le procédé selon l'une quelconque des revendications 1 à 9.
